# EUROPEAN PATENT APPLICATION

(11) **EP 3 942 924 A1**
(43) Date of publication of application: **26.01.2022**
(21) Application number: 21183637.4
(22) Date of filing: 05.07.2021
(51) Int. Cl.: A01K 1/01

(54) **A SYSTEM, A LITTER BOX AND A METHOD FOR RESTOCKING PET LITTER**

(30) Priority: 24.07.2020 PL 43479020
(71) Applicant: MYKOTTY SPOLKA Z OGRANICZONA ODPOWIEDZIALNOSCIA, 60-855 Poznan (PL)
(72) Inventor: Pietrusiak, Marta, 88-200 Radziejow (PL)
(74) Representative: Bury & Bury

(57) **Abstract**

A pet litter restocking system comprising at least one pet litter box (1) provided with a housing having a room for a litter (2), comprising a control arrangement (MCU) operatively connected to at least one presence detector (7) and at least one transceiver unit (8), the system also including an application installed on an external device (3) capable of making a connection with the transceiver unit (8) of the litter box, according to the invention is characterized by further comprising a tag (4) attached to litter (2) provided in a replaceable cartridge for the litter box, recognizable by at least one presence detector (7) and readable by the control arrangement (MCU) capable of transferring information via the transceiver unit (8) to the external device (3) with the application installed.

A pet litter box according to the invention is adapted to read and record at least a tag (4) attached to a litter provided in a replaceable cartridge for the litter box.

In the method according to the invention a tag (4) attached to a litter (2) provided in a replaceable cartridge for the litter box is read, visits of a pet to the litter box are counted and a request to get new litter (2) is issued.

## Description

The present invention relates to a system, a litter box and a method for restocking pet litter. The invention also relates to monitoring the behavior of pets, both for the purpose of facilitating the maintenance of cleanliness and for drawing conclusions about the behavior of the pet.

There are known methods of monitoring the behavior of pets visiting the litter box. For example, US8878680 discloses an indicator of the presence of a cat in a litter box, which sends to a computer or a mobile phone information regarding the visit of the cat to the litter box.

Also are known, e.g. from US8797166B2 and US10104871B2, systems, methods and software products for monitoring the behavior, health and other characteristics of pets visiting the litter box being a part of a system capable of communicating information about the health parameters of a pet. In turn, US9807982B2 discloses a system for collecting data on the biological functions of an animal wearing a dedicated collar.

Prior art solutions do not enable the control of the litter replacement intervals in the litter box. Usually, there is no need to replace the litter after each visit of the pet, the litter can be replaced periodically. However, the replacement intervals are influenced by the number of pets using the litter box and the periodicity of visits to the litter box by the pet, which in turn depends on the pet's health condition. Even with the fixed replacement regime, it happens that the owners of the pet forget about increasing the reserve of the litter. The object of the invention is to eliminate these drawbacks.

A pet litter restocking system comprising at least one pet litter box provided with a housing having a room for a litter, comprising a control arrangement operatively connected to at least one presence detector and to at least one transceiver unit, the system also comprising an application installed on an external device capable to be connected to the transceiver unit of the litter box, according to the invention is characterized by further comprising a tag attached to the litter provided in a replaceable cartridge for the litter box, recognizable by at least one presence detector and readable by the control arrangement capable of transferring information via the transceiver unit to the external device with the application installed.

In a preferred embodiment at least one presence detector is capable of distinguishing the presence of different pets.

In another preferred embodiment the litter box comprises two or more presence detectors, at least one of which is capable of recognizing the presence of a pet and at least one of which is capable of recognizing the tag attached to the litter.

The presence detector is preferably an NFC/ RFID reader.

The application installed on the external device is preferably adapted to issue a request to get new litter and is preferably capable of monitoring the health of a pet.

In a preferred embodiment the application installed on the external device is capable of monitoring the health of a pet at least based on the number and/or frequency of pet's visits to the litter box.

The external device is preferably a mobile device.

A pet litter box provided with a housing having a room for a litter, comprising a control arrangement operatively connected to at least one presence detector and to at least one transceiver unit according to the invention is characterized in that it is further adapted to read and record at least a tag attached to a litter placed in a replaceable cartridge for the litter box, recognizable by at least one presence detector, which is preferably an NFC/ RFID reader.

In a preferred embodiment at least one presence detector is capable of distinguishing the presence of different pets.

In a preferred embodiment the litter box is provided with two or more presence detectors, at least one of which is capable of recognizing the presence of a pet and at least one of which is capable of recognizing the tag attached to the litter.

The litter box is preferably provided with side lighting, which is preferably arranged to indicate, by color, the need for the litter replacement, low power, system faults or a pet health alert.

A method of restocking pet litter in a pet litter box provided with a housing having a room for a litter, comprising a control arrangement operatively connected to at least one presence detector and to at least one transceiver unit capable of being connected to an external device comprising an application, according to the invention is characterized by reading, by means of the control arrangement, a tag attached to litter provided in a replaceable cartridge for the litter box, recognizable by at least one presence detector,
counting the number of visits of a pet to the litter box, recognized by at least one presence detector, sending, by means of the transceiver unit operatively connected to the control arrangement, information read by the presence detector to the external device comprising the application,
and issuing a request to get new litter based on the information read, using the application running on the external device.

In a preferred embodiment the presence of different pets in the litter box is distinguished.

The request to get new litter is preferably issued after a predetermined number or after a predetermined frequency of visits of pets to the litter box have been exceeded.

The solution according to the invention also makes it possible to monitor the health of a pet. The frequency of visits to the litter box by the pet and the measured time spent in the litter box are directly correlated with the proper functioning of the kidneys.

The subject of the invention has been shown in the embodiments depicted in the drawing, in which:
Fig. 1 shows an exemplary diagram of the system according to the invention,
Fig. 2 - a side view of the litter box,
Fig. 3 - location of the essential elements of the litter box,
Fig. 4 - an example location of the tag in the litter cartridge,
Fig. 5 - the data flow of the tag,
Fig. 6 - an exemplary flowchart of the method according to the invention when identifying the litter cartridge,
Fig. 7 - an exemplary flowchart of the method according to the invention when identifying a pet visiting the litter box.

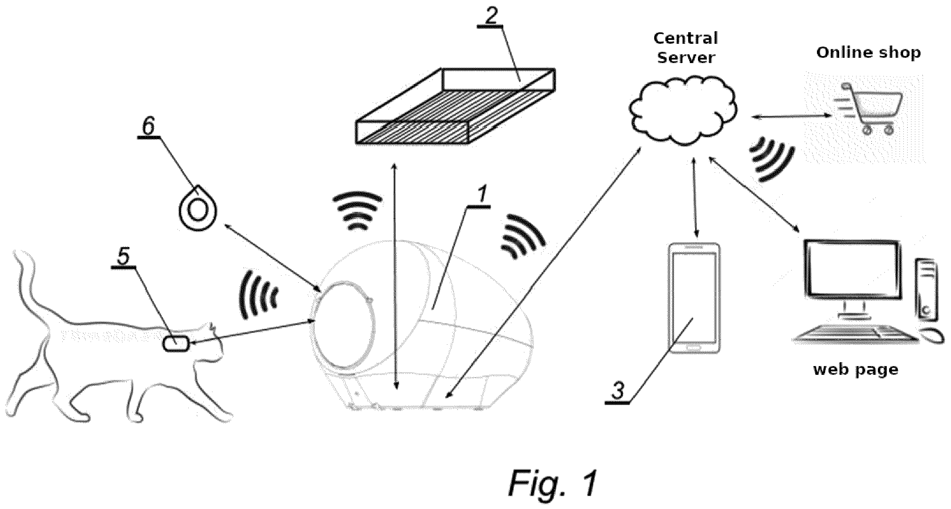

Fig. 1 is an exemplary diagram of the cat litter restocking system. The principle of the system and the signals flow between its elements will be the same for other pets.

The frequency of litter replacements in the litter box is influenced by the number of cats using the litter box and the frequency of visits to the litter box by the cats. The operation of the exemplary cat litter restocking system is based on two basic premises:
- determining the frequency of visits to the litter box by the cat; one filling of the litter box with litter is enough for 50 visits of one cat on average; the user can modify this parameter in the mobile application;
- determining the number of cats using a given litter box; the presence detector recognizes which cat is using the litter box; cats can be of different breeds and ages, which can have an impact on the amount of fluid ingested and donated; the cats are distinguished by a presence detector 7, for example an NFC/RFID unit with an antenna placed around the litter box entrance; the presence detector 7 reads a chip tag 5 implanted in the cat's neck or a pendant 6 worn by the cat; if there are two litter boxes in the house and, for example, two cats, it may happen that the cats use one of the litter boxes for urination, and the other one - for passing faeces; then in the former one the litter is being used up faster and its number of visits can be reduced, e.g. from 50 to 25.

The system according to the invention consists of three parts:
- at least one litter box 1 capable of receiving the signal from the NFC/RFID tag 4 being placed on the litter cartridge 2, processing it and sending to an application,
- an external device 3 with an application that receives the signal from the litter box 1, processes it by means of the application and outputs a request for new litter 2. The application may, for example, order new litter on behalf of a customer; triggering the order of litter may be specified by the customer in the application by setting the consent to the automatic order and the threshold at which amount of litter available in the house the next litter cartridge should be delivered and how far in advance it should be delivered,
- a litter cartridge 2 with the RFID tag 4 being glued on to allow the presence detector 7 to recognize the applied cartridge.

The frequency of visits to the litter box by the cat and the measured time spent in the litter box are directly correlated with the proper functioning of the kidneys. The frequency of visits to the litter box by the cat greater than 5 times a day is an alarming signal about the possibility of urological problems, which should be consulted with a veterinarian.

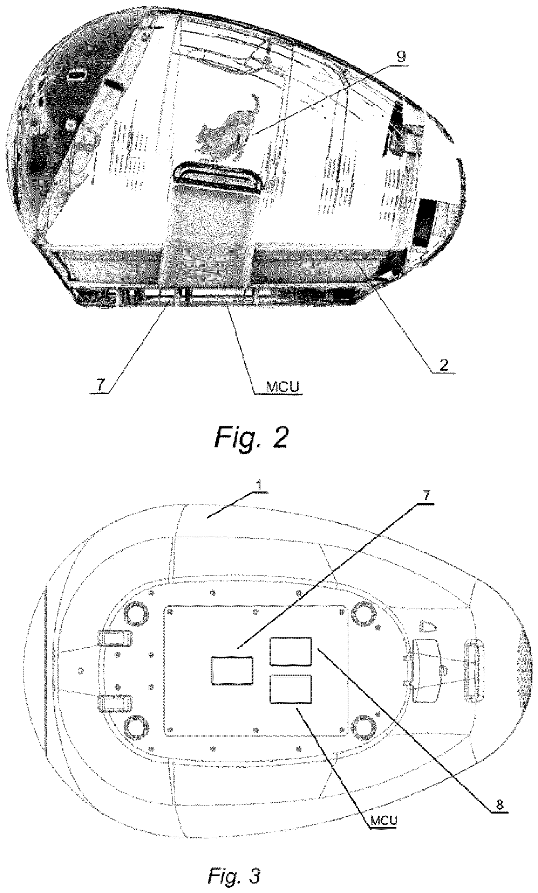

Fig. 2 shows a side view of the litter box, whereas Fig. 3 shows the location of the essential elements of the litter box, i.e. the control arrangement (MCU), the presence sensor 7 which in the present embodiment is an NFC/RFID unit, and the transceiver unit 8 which in the present embodiment is a WiFi unit.

The litter box also has weight sensors (not shown) located in the litter box feet, making it possible to monitor the cat's weight on a daily basis. Abnormalities above/below 10% per month can be worrying and may indicate that consultation with a veterinarian is required.

The litter box, in addition to sending an information indicating the need for replacement of the litter to the mobile application (and ultimately to the central server, which distributes the signal to the application on the website) and monitoring cat's health by determining the frequency of cat's visits to the litter box and cat's weight, is also provided with the side lighting, which becomes red for critical alerts, green when litter needs to be replaced, and blue when battery power is running out.

By reading the tag 4, i.e. the NFC tag contained in the litter package, it is possible to monitor the frequency of the litter replacements.

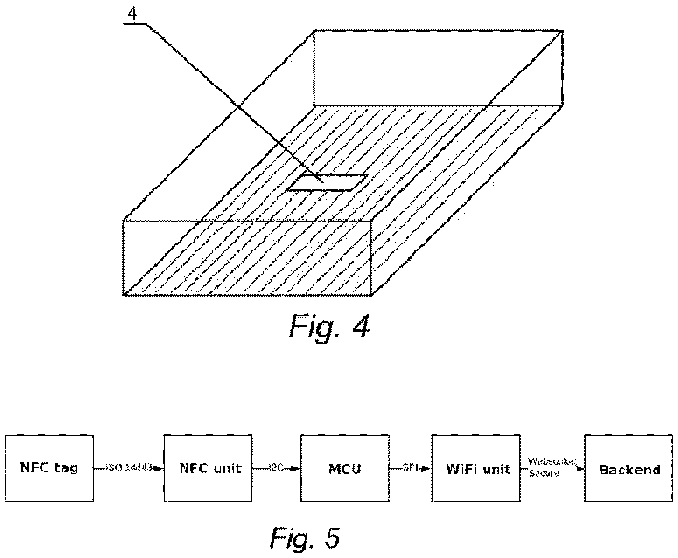

The flow of data regarding tag ID through the litter box according to the invention is shown in Fig. 5.

The NFC tags used in the present embodiment are non-programmable and have a unique ID, they are passive tags compliant with the ISO/IEC 14443 standard. The carrier frequency is 13.56 MHz.

The physical implementation is based on the three cooperating circuits:
- the NFC reader unit based on the PN532 chip by NXP
- the microcontroller from the Kinetis KL46 family by NXP
- the WiFi unit based on the CC3100 chip by Texas Instruments.

When reading, the MCU control arrangement, in the embodiment a microcontroller, controls the NFC reader unit via the I2C interface and attempts to read the tag through this NFC reader unit. The information obtained is processed by the microcontroller and then sent by the transceiver unit 8, in the embodiment a WiFi unit, which is controlled by the microcontroller via the SPI interface. The data are transferred via the Websocket Secure protocol.

In the software, the tag reading is triggered by:
- turning the device on - this enables immediate detection whether litter is present;
- physical changes in the configuration of the device - reinstallation of the top cover, which during use may indicate the replacement of the device's filter or the litter replacement;
- physical changes in the configuration of the device - reinstallation of the front cover with a door, which during use may indicate the litter replacement;
- synchronization forced by the user - in this way the user can trigger the reading and automatic updating of the state of the litter box 1 in case of the litter replacement made without changing the physical configuration of the litter box;
- receiving a scales taring trigger frame;
- the NFC tag reading is triggered every 4 hours by the internal clock - this ensures constant monitoring without user intervention.

Data sent via Websocket Secure have the following form:
- correct tag reading frame: DEV_EVENT = X | Y | Z | P,
   where:
   o X - time of frame preparation for sending (UTC)
   o Y - time of reading ID from the tag (UTC)
   o Z - event identification number, for correct reading of NFC - 111
   o P - tag ID in HEX format;
- failed tag reading frame (no tag):
   o DEV_EVENT = X | Y | Z, where:
   o X - time of frame preparation for sending (UTC)
   o Y - time of reading ID from the tag (UTC)
   o Z - event identification number, for incorrect reading of NFC - 112.

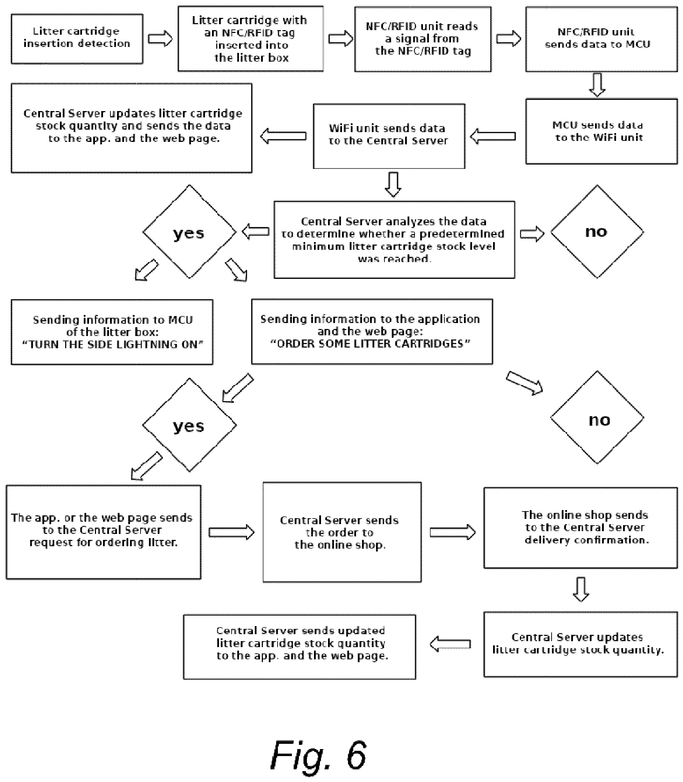

The data are interpreted based on the current state of the litter box as well as the past events. An exemplary flow chart of the method according to the invention for identifying the litter cartridge is shown in Fig. 6. In the exemplary version shown in Fig. 6, replacing the litter cartridge 2 with a new one is associated with a request for replenishing the stock of litter cartridges depending on the predefined minimum stock level.

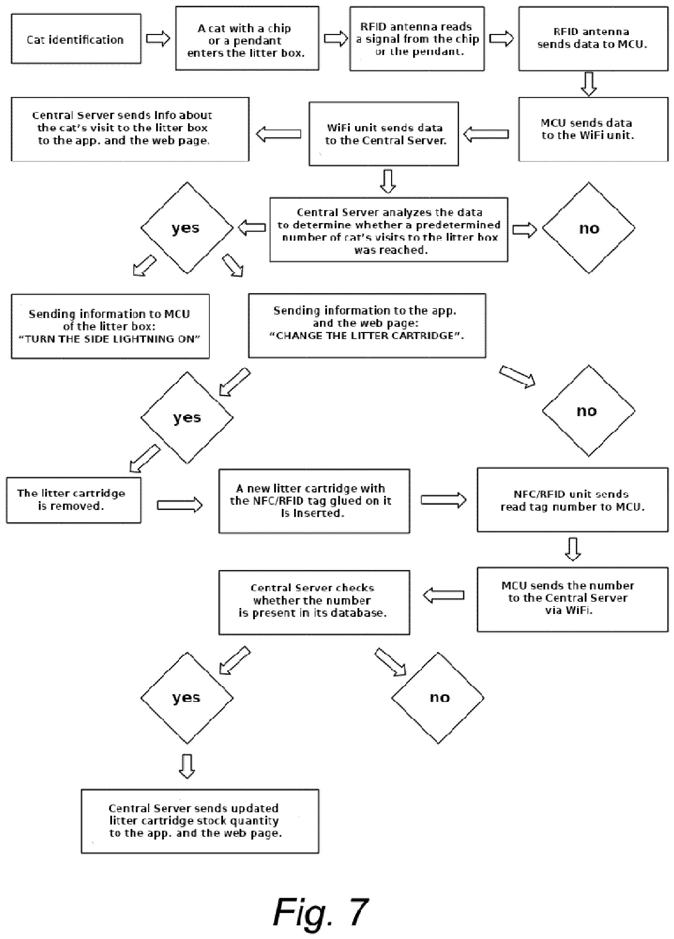

Fig. 7 is an exemplary flowchart of the method according to the invention for identifying a pet visiting the litter box. In an exemplary embodiment, the data on the number/frequency of visits by a pet to the litter box are analyzed by the central server, but this is only one of many possibilities.

The above embodiments merely illustrate the inventive concept and in no way limit the scope of the patent protection, which is defined in the following claims.

## Claims

1. A pet litter restocking system comprising
at least one pet litter box (1) provided with a housing with room for litter (2), comprising a control arrangement (MCU) operatively connected to at least one presence detector (7) and at least one transceiver unit (8), the system also including an application installed on an external device (3) capable of making a connection with the transceiver unit (8) of the litter box, **characterized by**
further comprising a tag (4) attached to a litter (2) provided in a replaceable cartridge for the litter box, recognizable by at least one presence detector (7) and readable by the control arrangement (MCU) capable of transferring information via the transceiver unit (8) to the external device (3) with the application installed.

2. The system according to claim 1 **characterized in that** at least one presence detector (7) is capable of distinguishing the presence of different pets.

3. The system according to claim 1 **characterized in that** the litter box (1) comprises two or more presence detectors (7), at least one of which is capable of recognizing the presence of a pet and at least one of which is capable of recognizing the tag attached to the litter.

4. The system according to claim 1 **characterized in that** the application installed on the external device (3) is adapted to issue a request to get new litter.

5. The system according to claim 1 **characterized in that** the application installed on the external device (3) is capable of monitoring the health of a pet.

6. The system according to claim 1 or 5 **characterized in that** the application installed on the external device (3) is capable of monitoring the health of a pet based at least on the number and/or frequency of visits of the pet to the litter box (1).

7. The system according to claim 4 or 5 **characterized in that** the external device (3) is a mobile device.

8. A pet litter box (1) provided with a housing having a room for a litter (2), comprising a control arrangement (MCU) operatively connected to at least one presence detector (7) and at least one transceiver unit (8) **characterized in that**
it is further adapted to read and record at least a tag (4) attached to a litter provided in a replaceable cartridge for the litter box, recognizable by at least one presence detector (7).

9. The litter box according to claim 8 **characterized in that** at least one presence detector (7) is capable of distinguishing the presence of different pets.

10. The litter box according to claim 9 **characterized in that** it is provided with two or more presence detectors (7), at least one of which is capable of recognizing the presence of a pet and at least one of which is capable of recognizing the tag attached to the litter.

11. The litter box according to claim 8 **characterized in that** it is provided with side lighting (9).

12. The litter box according to claim 11 **characterized in that** the side lighting (9) is arranged to indicate, by color, the need for the litter replacement, low power, system faults, or a pet health alert.

13. A method of restocking pet litter in a pet litter box (1) provided with a housing having a room for a litter (2), comprising a control arrangement (MCU) operatively connected to at least one presence detector (7) and at least one transceiver unit (8) capable of making a connection with an external device (3) comprising an application **characterized by**
reading, by means of the control arrangement (MCU), a tag (4) attached to litter (2) provided in a replaceable cartridge for the litter box, recognizable by at least one presence detector (7), counting the number of visits of a pet to the litter box, recognized by at least one presence detector (7),
sending, by means of the transceiver unit (8) operatively connected to the control arrangement (MCU), information read by the presence detector (7) to the external device comprising the application, and
issuing a request to get new litter (2) based on the information read, using the application running on the external device (3).

14. The method according to claim 13 **characterized in that** the presence of different pets in the litter box is distinguished.

15. The method according to claim 13 **characterized in that** the request to get new litter (2) is issued after a predetermined number or a predetermined frequency of visits of pets to the litter box (1) have been exceeded.
